# EUROPÄISCHE PATENTSCHRIFT

(11) **EP 3 305 143 B1**
(45) Veröffentlichungstag und Bekanntmachung des Hinweises auf die Patenterteilung: **09.10.2019**
(21) Anmeldenummer: 17192628.0
(22) Anmeldetag: 30.07.2014
(51) Int. Cl.: A47J 31/44

(54) **KAFFEEMASCHINE**
COFFEE MACHINE
MACHINE À CAFÉ

(30) Priorität: 31.07.2013 AT 6152013
(43) Veröffentlichungstag der Anmeldung: 11.04.2018
(62) Teilanmeldung aus: 14780549.3
(73) Patentinhaber: Tilbürger, Frank, 26160 Bad Zwischenahn (DE)
(72) Erfinder: Tilbürger, Frank, 26160 Bad Zwischenahn (DE)
(74) Vertreter: Ellmeyer, Wolfgang

(56) Entgegenhaltungen:
- WO-A2-2009/135869
- DE-U1- 20 311 272
- DE-U1-202008 011 757
- DE-U1-202009 006 190

## Beschreibung

Die vorliegende Erfindung betrifft eine Kaffeemaschine mit einer Halterung für Kaffeetrester-Auffangbehälter-Einsätze.

Bei Espresso-Kaffeemaschinen und Kaffeeautomaten mit Mahlwerken neuerer Bauart ist an ihrer Unterseite, oder auch unterhalb der Maschine, in der Regel ein Behälter zum Auffangen des Kaffeetresters vorgesehen - sei es als Lade oder Klappe der Maschine selbst oder getrennt davon, z.B. als Teil eines Möbels, auf dem die Kaffeemaschine steht. Nach dem Brühen des Kaffees mittels Hindurchleiten von üblicherweise ca. 90 °C heißem Wasser durch feingemahlenes Kaffeepulver wird der noch heiße und feuchte Trester von der Maschine in diesen Behälter befördert, d.h. normalerweise einfach herabfallen gelassen. Üblicherweise ist der Auffangbehälter zu diesem Zweck eine Schublade und besteht im Wesentlichen aus Kunststoff oder Metall, z.B. Edelstahl.

Der in der Folge im Behälter abkühlende und somit warm-feuchte Trester stellt einen ausgezeichneten Nährboden für Mikroorganismen, vor allem für Schimmel- und ähnliche Pilze sowie Bakterien dar. Aus diesem Grund muss der Trester-Auffangbehälter in regelmäßigen, kurzen Abständen sorgfältig gereinigt werden, um zu verhindern, dass sich die Mikroorganismen inner- und außerhalb der Kaffeemaschine verbreiten und die Gesundheit der Benutzer gefährden, sowie um unangenehmen Geruch des Tresters zu verhindern. Eine solche regelmäßige Reinigung ist jedoch nicht nur zeitaufwändig, weswegen sie häufig unterlassen wird, sondern verbraucht zudem große Mengen an Wasser und Reinigungsmitteln.

Zur Lösung des Problems wurden bereits mehrere Arten von Einsätzen für den Trester-Auffangbehälter vorgeschlagen, die zumeist entweder aus feuchtigkeitsbeständigem Kunststoff oder auch aus einem saugfähigen Material wie Papier oder Karton bestehen, dadurch vorzugsweise biologisch abbaubar und kompostierbar sind und zusammen mit dem sich darin ansammelnden Kaffeetrester entsorgt werden können. Der Einsatz kann mitunter, z.B. mittels eines Bands oder Gummizugs, am Rand des Auffangbehälters fixiert werden; siehe DE 20 2008 011 757 U1, DE 20 2009 016 898 U1, EP 1.500.612 A1, DE 20 2004 018 686 U1 oder DE 20 2009 008 628 U1.

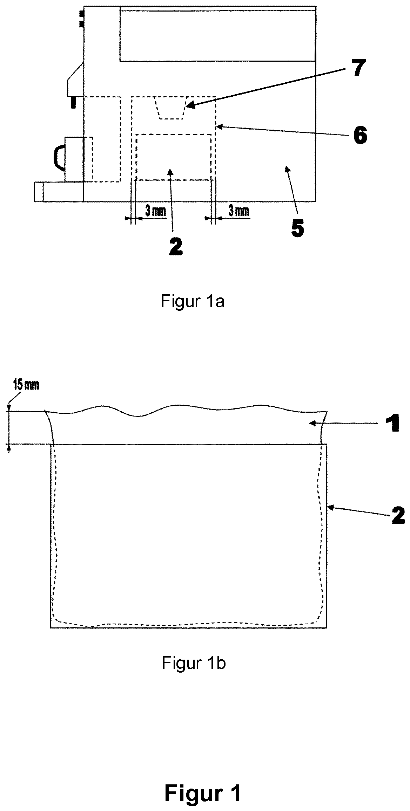

In den Fig. 1a und 1b, die den Fig. 1 und 2 von DE 20 2008 011 757 U1 entsprechen, ist eine Ausführungsform eines Einsatzes gemäß diesem Stand der Technik dargestellt, wobei Bezugszeichen 1 den Einsatz für den Auffangbehälter 2 eines Kaffeeautomaten 5 mit einer Innenwand 6 bezeichnet. Bei dem dargestellten Abstand von zumindest 3 mm zwischen dem Behälter 2 und der Innnenwand 6 kann der Rand des Einsatzes 1 umgeschlagen und gegebenenfalls mit einem Gummiband oder dergleichen am Rand des Behälters 2 befestigt werden. Mit Bezugszeichen 7 wurde hierin zusätzlich der Trester-Abgabestutzen der Kaffeemaschine gekennzeichnet.

Keine dieser obigen Ausführungsformen nach dem Stand der Technik löst jedoch die eingangs geschilderten Probleme zur Gänze:
a) Einerseits wird nur unzureichend verhindert, dass Teile des herabfallenden, feuchten, mitunter klumpigen und damit relativ schweren Tresters entweder gar nicht im Einsatz landen oder mitunter wieder aus diesem herausfallen; z.B. indem Tresterklumpen bei Kontakt mit einer Bodeneinlage gemäß EP 1.500.612 A1 (siehe die Fig. 8-10) von dieser abprallen, dabei zerbrechen und durch Streuung auch neben dem Einsatz landen.
b) Die Verbreitung von unangenehmem Geruch durch den im Einsatz gesammelten Trester ist weiterhin möglich, wenn auch durch partiellen Wasserentzug verzögert.
c) Und eventuell entstandene Schimmelsporen können ebenfalls weiterhin aus dem Sammelbehälter entweichen.

In der WO 2015/015281 A1, die der EP 3.027.095 A1 entspricht und die Stammanmeldung zu der gegenständlichen Teilanmeldung darstellt, offenbart der Erfinder des vorliegenden Anmeldungsgegenstands einen Einsatz für den Kaffeetrester-Auffangbehälter einer Kaffeemaschine, der als getrennt vom Auffangbehälter vorliegender oder davon lösbarer Einwegartikel ausgeführt ist und dadurch gekennzeichnet ist, dass der Einsatz einen in Gebrauch mit dem Auffangbehälter in Kontakt stehenden Auffangteil und einen Verbindungsteil umfasst, wobei der Auffangteil eine Form aufweist, die im Wesentlichen an die Form des Behälters angepasst oder anpassbar ist, und der Verbindungsteil sich gegenüber dem Auffangteil nach oben hin verjüngt und zumindest ein Verbindungsmittel zum dichtenden Verbinden des Einsatzes mit einem Trester-Abgabestutzen der Kaffeemaschine umfasst.

Dadurch entfällt nicht nur jegliche Reinigung des Auffangbehälters selbst, da nur der Einsatz entnommen und durch einen frischen Einsatz ersetzt wird, wie dies auch mit bereits bekannten Ausführungsformen möglich war, sondern es wird auch dafür gesorgt, dass der in den Auffangbehälter herabfallende Kaffeetrester zur Gänze in den Einwegartikel und aus diesem nicht wieder heraus fällt. Zusätzlich werden Geruchsbelästigung und die Verbreitung von Schimmelsporen wirksam unterdrückt bzw. bei entsprechender Wahl des Materials für den Einsatz sogar gänzlich ausgeschaltet.

Durch die Anpassung der Form des Auffangteils an jene des Auffangbehälters wird der Raum optimal genutzt, so dass größere Mengen an Trester darin untergebracht werden können, wodurch dieser seltener ausgewechselt zu werden braucht. Aufgrund der Verbindbarkeit des Verbindungsteils mit dem Trester-Abgabestutzen der Maschine in dichtender Weise ist ja die Zeitspanne, nach der unangenehme Gerüche oder Schimmelsporen nach außen dringen, enorm verlängert.

Der Verbindungsteil des Einsatzes ist zu diesem Zweck zum Tresterauslass hin hochgezogen und kann diesen dann beispielsweise trichterfömig umgeben, z.B. indem zum oberen Ende hin auf die Verjüngung wieder eine entsprechende Erweiterung des Querschnitts um den Stutzen herum folgt. Durch eine solche Erweiterung kann der Einwegartikel nicht nur einfacher über den Abgabestutzen gezogen werden als bei einem im Wesentlichen gleichbleibenden, relativ engen Querschnitt, sondern es kann auch verhindert werden, dass sich ein Verbindungsmittel zum dichtenden Verbinden des Einsatzes mit dem Abgabestutzen vom Verbindungsteil löst, worauf später noch näher eingegangen wird.

Der Auffangteil kann in seiner Form entweder fix an die Form des Auffangbehälters angepasst sein, wie dies auch für mehrere Einsätze nach dem Stand der Technik beschrieben ist, oder kann an diese "anpassbar" sein. Damit ist gemeint, dass der Einsatz aus einem verformbaren Material besteht - und gegebenenfalls auch um ein gewisses Maß größer als der Behälter selbst ist - und nach dem Einlegen in den Behälter durch manuelles Glattstreifen an dessen Form angeglichen werden kann. Dabei wird natürlich bevorzugt, dass der Einsatz, oder zumindest der Auffangteil, aus einem dünnen, weichen, leicht verformbaren Material besteht, vorzugsweise aus Stoff oder einer dünnen Kunststofffolie. In dieser bevorzugten Ausführungsform liegt der Einsatz besonders bevorzugt in Form eines Stoff- oder Kunststoffbeutels mit (etwas) größerem maximalem Innendurchmesser als der Auffangbehälter vor.

Mit "dichtender Verbindung" ist hierin vor allem gemeint, dass keinerlei Kaffeetrester neben den Einwegartikel fallen kann. Dabei kann es sich vorzugsweise auch um eine im Wesentlichen luftdichte Verbindung handeln, wofür eine spezielle Auswahl an - eben luftdichten - Materialien für den Einwegartikel zu treffen ist, wofür insbesondere Kunststoffolien, z.B. aus hochdichtem Polyethylen (HDPE) oder Polypropylen, in Frage kommen. Durch ein solches im Wesentlichen luftdichtes Material wird nicht nur der Zutritt von Mikroben erschwert, sondern auch das Auftreten unangenehmer Gerüche in der Umgebung der Kaffeemaschine praktisch vollständig vermieden.

Das Verbindungsmittel ist vorzugsweise ein Ring, und in besonders bevorzugten Ausführungsformen ist der Ring Teil einer eigenen Einrichtung zur Befestigung des Einsatzes an einer entsprechenden Halterung der Kaffeemaschine oder mit einer solchen Einrichtung fest verbunden. Eine solche Einrichtung ist vorzugsweise zum Einsetzen in die zugehörige Halterung an einer Kaffeemaschine, z.B. in eine Nut oder Schiene oder einen Rahmen der Halterung, angepasst.

Besonders bevorzugt ist oder umfasst die Einrichtung eine Platte, und der Ring wird durch eine kreisförmige Ausnehmung darin ausgebildet. Das heißt, die Innenseite der Ausnehmung in der Platte stellt den Reibschluss zwischen der Platte und dem Stutzen und somit die dichtende Verbindung her - und stellt daher gleichzeitig den "Ring" dar.

In WO 2009/135869 A1 wird eine Maschine zur Bereitung von Getränken, vorzugsweise Kaffee, aus entsprechenden Einwegkapseln offenbart. Diese umfasst unter anderem einen Auffangbehälter für verbrauchte Kapseln, der gemäß der dort offenbarten Erfindung relativ zum Rest der Maschine in eine Position kipp- oder verschwenkbar ist, in der der Behälter einfacher aus der Maschine entnehmbar ist, um ihn leeren zu können.

### OFFENBARUNG DER ERFINDUNG

Die Erfindung stellt eine Kaffeemaschine bereit, die einen Trester-Abgabestutzen und einen Trester-Auffangbehälter, der zur Aufnahme von Einweg-Einsätzen geeignet ist, umfasst und dadurch gekennzeichnet ist, dass sie weiters eine Halterung zur Verbindung mit einer plattenförmigen Einrichtung eines Einweg-Einsatzes umfasst, die zur Befestigung des Einsatzes an der Maschine dient und in der eine kreisförmige Ausnehmung ausgebildet ist,
wobei die Halterung ein an der Kaffeemaschine befestigter und entweder biegsamer oder relativ zum Stutzen verschwenkbar gelagerter Bügel ist, der einen Rahmen zur Aufnahme der plattenförmigen Einrichtung des Einsatzes umfasst, und
wobei der der Bügel zum Einsetzen bzw. Austauschen des Einsatzes in eine von außen gut zugängliche Austauschposition verbiegbar oder schwenkbar ist und mit eingesetztem bzw. ausgetauschtem Einsatz in eine Betriebsposition zurückbiegbar oder -schwenkbar ist, in der zwischen der kreisförmigen Ausnehmung der Einrichtung des Einsatzes und dem Trester-Abgabestutzen der Maschine eine reibschlüssige Verbindung herstellbar ist, wobei der Bügel vorzugsweise in zumindest einer der beiden Positionen arretierbar ist und noch bevorzugter in der Betriebsposition arretierbar ist.

Durch Ausrüstung einer ansonsten herkömmlichen Kaffeemaschine mit einer speziellen Halterung für bevorzugte Ausführungsformen der oben beschriebenen Einweg-Einsätze wird wirksam vermieden, dass es zu einer Trennung der Verbindung zwischen dem Einsatz und dem Trester-Abgabestutzen kommt, wodurch sichergestellt wird, dass der in den Auffangbehälter fallende Kaffeetrester ausschließlich in den Einwegartikel und aus diesem nicht wieder heraus fällt.

Die Halterung ist dabei, wie oben erwähnt, ein Rahmen zur Aufnahme der Einrichtung oder umfasst einen solchen. Auf diese Weise kann die vorzugsweise plattenförmige Einrichtung in den Rahmen eingesetzt oder eingeschoben werden und wird so während des Betriebs der Kaffeemaschine fix in Position gehalten.

Die Halterung ist dabei ein an der Kaffeemaschine verschwenkbar gelagerter Bügel, um die Zugänglichkeit von außen zu erhöhen. Zum Austausch des Einsatzes für den Trester-Auffangbehälter wird der Bügel einfach aus seiner Betriebsposition in eine leichter zugängliche Austauschposition geschwenkt, z.B. zu einer Öffnung der Kaffeemaschine hin. In beiden Positionen, vorzugsweise zumindest in der Betriebsposition, kann der Bügel arretierbar sein.

In erfindungsgemäßen Ausführungsformen ist der der Bügel entweder biegsam oder relativ zum Stutzen verschwenkbar gelagert, d.h. zum Austauschen des Einsatzes wird der Bügel vom Trester-Abgabestutzen weg, vorzugsweise abwärts, und in der Folge wieder zurück, d.h. aufwärts, in die Betriebsposition geschwenkt, wobei die Verbindung zwischen dem Einsatz und dem Stutzen zunächst gelöst und anschließend wieder hergestellt wird. Durch die kreisförmige Ausnehmung in der Platte wird ein Ring gebildet, der durch das Verschwenken des Bügels auf den Stutzen gedrückt wird bzw. von diesem wieder gelöst wird.

Das Prinzip ähnelt dem Einsetzen eines Staubsaugerbeutels in einen herkömmlichen Beutel-Staubsauger: Ein an der Oberseite des Staubsaugerbeutels angebrachtes plattenförmiges Element mit einer zentralen kreisrunden Öffnung wird in eine Schiene eines Bügels im Staubsauger eingeschoben. Der Bügel ist vorzugsweise biegsam oder noch bevorzugter verschwenkbar gelagert, um den Beutelaustausch zu erleichtern. Allerdings wird beim Zurückbiegen oder -schwenken des Bügels in die Betriebsposition noch keine Verbindung zwischen dem Beutel und dem in das Gerät hineinragenden Ende des Staubsaugerrohres hergestellt. Diese kommt erst durch das Wiederverschließen der entsprechenden Klappe zustande.

Gemäß vorliegender Erfindung wird hingegen der Ring als Verbindungsmittel zwischen Einsatz und Stutzen unmittelbar beim Zurückbiegen oder -verschwenken der Bügels gegen den Trester-Abgabestutzen der erfindungsgemäßen Kaffeemaschine gedrückt und somit auf dessen Umfang aufgezogen. Eine zusätzliche Positionsfixierung, z.B. durch eine Schnapparretierung oder eine Haken/Ösen-Kombination oder dergleichen, kann, muss aber nicht vorgesehen sein.

### KURZBESCHREIBUNG DER ZEICHNUNG

Fig. 1 zeigt eine Ausführungsform eines Einsatzes und einer Kaffeemaschine nach dem Stand der Technik, wobei in Fig. 1a schematisch eine herkömmliche Kaffeemaschine 5 nach dem Stand der Technik gemäß DE 20 2008 011 757 U1 dargestellt ist, die unter anderem in einem von außen zugänglichen (in der Regel mit einer Klappe verschlossenen) Innenraum mit einer Innenwand 6, einen Trester-Abgabestutzen 7 und einen darunter angeordneten Auffangbehälter 2 umfasst.

In Fig. 1b ist ein Einsatz 1 für den Auffangbehälter 2 dargestellt, der geringfügig über den Rand des Behälters ragt und zum Zwecke des Umschlagens des Randes des Einsatzes um den Behälterrand vorzugsweise mindestens 15 mm weit überstehen sollte. Hierzu ist weiters der in Fig. 1a dargestellte Abstand von zumindest 3 mm zwischen dem Behälter 2 und der Innnenwand 6 der Maschine erforderlich. Der umgeschlagene Einsatz-Rand kann dann gegebenenfalls mit einem Gummiband oder dergleichen am Behälterrand befestigt werden.

Die vorliegende Erfindung bietet hingegen eine kostengünstige und vergleichsweise einfach zu realisierende Möglichkeit, eine aufwändige Reinigung der Kaffeetrester-Auffangbehälter von Kaffeemaschinen zu vermeiden und Mikrobenkontamination dennoch wirksam zu verhindern, da sie durch die direkte Verbindung zwischen Einsatz und Trester-Abgabestutzen dafür sorgt, dass in den Auffangbehälter herabfallender Kaffeetrester zur Gänze in den entsprechenden Einsatz und nicht wieder aus diesem heraus fällt und Geruchsbelästigung oder Pilzsporenverbreitung effizient unterdrückt wird.

## Patentansprüche

1. Kaffeemaschine (5), umfassend einen Trester-Abgabestutzen (7) und einen Trester-Auffangbehälter (2), der zur Aufnahme von Einweg-Einsätzen (1) geeignet ist, **dadurch gekennzeichnet, dass** sie weiters eine Halterung zur Verbindung mit einer plattenförmigen Einrichtung eines Einweg-Einsatzes (1) umfasst, die zur Befestigung des Einsatzes (1) an der Maschine (5) dient und in der eine kreisförmige Ausnehmung ausgebildet ist,
wobei die Halterung ein an der Kaffeemaschine (5) befestigter und entweder biegsamer oder relativ zum Stutzen (7) verschwenkbar gelagerter Bügel ist, der einen Rahmen zur Aufnahme der plattenförmigen Einrichtung des Einsatzes (1) umfasst, und
wobei der Bügel zum Einsetzen bzw. Austauschen des Einsatzes (1) in eine von außen gut zugängliche Austauschposition verbiegbar oder schwenkbar ist und mit eingesetztem bzw. ausgetauschtem Einsatz (1) in eine Betriebsposition zurückbiegbar oder -schwenkbar ist, in der zwischen der kreisförmigen Ausnehmung der Einrichtung des Einsatzes und dem Trester-Abgabestutzen (7) der Maschine (5) eine reibschlüssige Verbindung herstellbar ist.

2. Kaffeemaschine nach Anspruch 1, **dadurch gekennzeichnet, dass** der Bügel in zumindest einer der beiden Positionen arretierbar ist.

3. Kaffeemaschine nach Anspruch 2, **dadurch gekennzeichnet, dass** der Bügel in der Betriebsposition arretierbar ist.

4. Kaffeemaschine nach Anspruch 2 oder 3, **dadurch gekennzeichnet, dass** der Bügel mittels einer Schnapparretierung oder einer Haken/Ösen-Kombination arretierbar ist.

## Claims

1. A coffee machine (5), comprising a grounds outlet nozzle (7) and a grounds collection container (2) suitable for receiving disposable inserts (1), **characterized in that** it further comprises a holder for connecting it to a plate-shaped device of a disposable insert (1), which serves for attaching the insert (1) to the machine (5) and in which a circular opening is formed,
wherein the holder is a retainer attached to the coffee machine (5) and being either bendable or swivelable relative to the nozzle (7), which retainer comprises a frame for receiving the plate-shaped device of the insert (1), and
wherein the retainer is bendable or swivelable into a replacement position easily accessible from the outside for inserting or replacing the insert (1) and is re-bendable or reswivelable, in combination with an inserted or replaced insert (1), into an operating position in which a frictional engagement between the circular opening of the device of the insert and the grounds outlet nozzle (7) of the machine (5) is producible.

2. The coffee machine of claim 1, **characterized in that** the retainer is lockable in at least one of the two positions.

3. The coffee machine of claim 2, **characterized in that** the retainer is lockable in the operating position.

4. The coffee machine of claims 2 or 3, **characterized in that** the retainer is lockable by means of a snap lock or a hook-and-eye combination.

## Revendications

1. Machine à café (5), comprenant un manchon d'épanse de marc (7) et un récipient collecteur de marc (2), qui est adapté pour recevoir des inserts jetables (1), **caractérisé en ce qu'**elle comprend, en outre, un support pour la liaison à un dispositif en forme de plaque d'un insert jetable (1), qui sert à attacher l'insert (1) à la machine (5) et dans lequel est formé un évidement circulaire,
le support étant un arceau attaché à la machine à café (5) et pouvant être soit fléchi, soit pivoté par rapport au manchon (7) et comprenant un cadre pour recevoir le dispositif en forme de plaque de l'insert (1), et
l'arceau pouvant être fléchi ou pivoté dans une position de remplacement, bien accessible depuis l'extérieur, pour insérer ou remplacer l'insert (1) et pouvant être de nouveau fléchi ou pivoté, en combinaison avec un insert (1) inséré ou remplacé, dans une position de fonctionnement, dans laquelle une liaison de friction peut être réalisée entre l'évidement circulaire du dispositif de l'insert et l'manchon d'épanse du marc (7) de la machine (5).

2. Machine à café selon la revendication 1, **caractérisé en ce que** l'arceau peut être verrouillé dans au moins une des deux positions.

3. Machine à café selon la revendication 2, **caractérisé en ce que** l'arceau peut être verrouillé dans la position de fonctionnement.

4. Machine à café selon les revendications 2 ou 3, **caractérisé en ce que** l'arceau peut être verrouillé par un verrouillage à encliquetage ou une combinaison de boucles et crochets.
